# FASCICULE DE BREVET EUROPEEN

(11) **EP 3 396 196 B1**
(45) Date de publication et mention de la délivrance du brevet: **18.12.2019**
(21) Numéro de dépôt: 18164123.4
(22) Date de dépôt: 27.03.2018
(51) Int. Cl.: F16F 7/116, B64D 11/06

(54) **MÉCANISME DE FILTRAGE DES VIBRATIONS DESTINÉ À ÊTRE AGENCÉ ENTRE UN ÉQUIPEMENT ET UN FUSELAGE D'AERONEF, SIÈGE EQUIPÉ D'UN TEL MÉCANISME**
SCHWINGUNGSFILTERMECHANISMUS ZUM EINBAU ZWISCHEN EINE AUSRÜSTUNG UND EINEM RUMPF EINES LUFTFAHRZEUGS, UND MIT EINEM SOLCHEN MECHANISMUS AUSGESTATTETER SITZ
A VIBRATION FILTER MECHANISM FOR ARRANGING BETWEEN A PIECE OF EQUIPMENT AND AN AIRCRAFT FUSELAGE, AND A SEAT FITTED WITH SUCH A MECHANISM

(30) Priorité: 28.04.2017 FR 1770436
(43) Date de publication de la demande: 31.10.2018
(73) Titulaire: Airbus Helicopters, 13725 Marignane Cedex (FR); AIRBUS HELICOPTERS DEUTSCHLAND GmbH, 86609 Donauwörth (DE)
(72) Inventeur: GUITTON, Julien, 13220 CHATEAUNEUF LES MARTIGUES (FR); CHAPUIS-DESPLANQUES, Anne-Claire, 13250 SAINT-CHAMAS (FR); WEISS, Ambrosius, 86150 AUGSBURG (DE); MANFREDOTTI, Thomas, 06480 LA COLLE SUR LOUP (FR)
(74) Mandataire: GPI & Associés

(56) Documents cités:
- WO-A2-2014/058401
- DE-A1-102008 052 424
- FR-A1- 2 951 700
- US-A- 4 311 213
- US-A- 4 718 719

## Description

La présente invention concerne le domaine des mécanismes antivibratoires destinés à filtrer les efforts dynamiques issus d'un fuselage d'un aéronef en général et d'un giravion en particulier, et transmis à un équipement solidaire dudit fuselage.

Dans le cas d'un giravion, le fuselage est soumis à des excitations de fréquences multiples en fonction de la fréquence de rotation et du nombre de pales du rotor principal de sustentation, voire de propulsion. En principe, le mécanisme de filtrage des vibrations est dimensionné pour une fréquence donnée, à savoir égale au produit de ladite fréquence de rotation du rotor par le nombre de pales.

Plus précisément, il s'agit selon l'invention de coupler le mouvement d'une masse en mouvement solidaire de l'équipement pour contrer les efforts dynamiques (excitations) par les effets d'inertie.

De tels mécanismes de filtrage permettent en outre de filtrer suivant au moins une direction les vibrations transmises à un équipement qui peut notamment se présenter sous la forme d'un siège apte à recevoir une personne de l'équipage ou un passager d'un tel aéronef pour assurer un confort acceptable. Dans ce cas, les mécanismes de filtrage des vibrations sont alors préférentiellement agencés pour filtrer les vibrations orientées suivant un axe en élévation perpendiculaire par rapport au plancher d'un tel aéronef.

De façon générale, il est connu de réaliser de tels mécanismes aptes à réaliser un filtrage des vibrations transmises à un équipement. Des mécanismes de ce type ont notamment été décrits dans les documents US 4 718 719, US4 311 213, WO 2014/058401 et DE 10 2008 052 424 ou encore par le demandeur dans les documents FR 2 951 700 et EP 1 719 700. Comme explicité dans ces documents, les vibrations générées par un aéronef en mouvement sont particulièrement importantes et sont généralement de faible amplitude ainsi que de fréquences élevées, par exemple de l'ordre de 10Hz à 25Hz.

De telles vibrations sont à la fois problématiques pour la tenue mécanique des équipements dans le temps ainsi que pour le confort, voire pour la santé, des personnes soumises régulièrement à de tels niveaux vibratoires de faible amplitude et de fréquences élevées.

Si les mécanismes de filtrage des vibrations tels que décrits dans les documents FR 2 951 700 et EP 1 719 700 sont particulièrement efficaces pour filtrer ces vibrations orientées suivant l'axe en élévation, ils sont cependant complexes à réaliser. En effet, de tels mécanismes comportent un grand nombre de pièces distinctes les unes des autres. Ainsi, lors de la fabrication de ces mécanismes de filtrage, un opérateur doit identifier individuellement chacune de ces pièces pour ensuite les assembler mécaniquement entre elles avec des organes de solidarisation supplémentaires.

Par ailleurs, de tels mécanismes comportent respectivement chacun deux organes de filtrage solidarisés chacun d'une part avec une première structure reliée au fuselage de l'aéronef et d'autre part avec une deuxième structure solidaire de l'équipement. Ces mécanismes comportent également des moyens de rappel élastique rapportés et assemblés avec les deux organes de filtrage. Les moyens de rappel élastique présentent alors une raideur prédéterminée et permettent de générer une force de rappel s'opposant à un déplacement relatif en rotation d'au moins un organe de filtrage par rapport à la première structure.

En outre, de tels moyens de rappel élastique peuvent être formés par des ressorts à lames 41 tels que décrits dans le document EP 1 719 700 ou des arbres de torsion 24 tels que décrits dans le document FR 2 951 700.

Ce grand nombre de pièces à solidariser entre elles rend ainsi de tels mécanismes de filtrage compliqués, longs et coûteux à assembler.

De plus, compte tenu du nombre important de pièces différentes et d'organes de solidarisation supplémentaires qu'ils comportent, de tels mécanismes de filtrage sont très lourds et engendrent une augmentation de masse importante sur un aéronef comportant généralement plusieurs équipements avec lesquels de tels mécanismes de filtrage peuvent être accouplés.

Par conséquent, si de tels mécanismes de filtrage peuvent améliorer le confort et la tenue mécanique dans le temps des équipements soumis à des vibrations de faible amplitude et de fréquences élevées, ils dégradent cependant considérablement les performances de vol de l'aéronef sur lequel ils sont agencés.

La présente invention a alors pour objet de proposer un mécanisme de filtrage permettant de s'affranchir des limitations mentionnées ci-dessus. Un tel mécanisme de filtrage comporte un nombre de pièces limité et est par conséquent simple à assembler avec un équipement. Un mécanisme de filtrage selon l'invention est donc peu coûteux à produire.

De plus, un autre objet de l'invention est de limiter la masse et l'encombrement de ce type de mécanisme de filtrage des vibrations pour ne pas dégrader les performances de vol d'un aéronef sur lequel il est rapporté.

L'invention se rapporte donc à un mécanisme de filtrage de vibrations destiné à être agencé à l'interface entre un fuselage d'un aéronef et un équipement de cet aéronef, le mécanisme de filtrage comportant un couple d'organes de filtrage solidarisés respectivement chacun d'une part avec une première structure destinée à être reliée au fuselage et d'autre part avec une deuxième structure de l'équipement, chaque organe de filtrage étant solidarisé selon une première liaison de type pivot à un degré de liberté en rotation avec la première structure et selon une seconde liaison de type pivot à un degré de liberté en rotation avec la seconde structure, le mécanisme de filtrage comportant des moyens de rappel élastique aptes à se déformer lors d'un déplacement relatif en rotation d'au moins un des organes de filtrage par rapport à la première structure, les moyens de rappel élastique présentant une raideur prédéterminée apte à générer une force de rappel s'opposant au déplacement relatif en rotation du (ou des) organe(s) de filtrage par rapport à la première structure,

Ce mécanisme est remarquable en ce que les organes de filtrage forment avec les moyens de rappel élastique un ensemble monolithique déformable élastiquement.

Autrement dit, selon l'invention les organes de filtrage et les moyens de rappel élastique sont agencés sous la forme d'une unique pièce monobloc comportant une capacité de déformation élastique. Ainsi, lors du fonctionnement de l'aéronef, le filtrage de vibrations entre le fuselage et l'équipement est obtenu par la déformation élastique de cet ensemble monolithique.

Par suite, un tel ensemble monolithique ne comporte aucun organe de solidarisation pour solidariser entre eux les organes de filtrage et les moyens de rappel élastique. Un tel mécanisme de filtrage est ainsi plus simple à assembler mais également très léger.

Cet ensemble monolithique peut notamment être formé par une pièce obtenue par un procédé d'usinage/taillage permettant d'enlever des copeaux de matière à un bloc formé d'une même matière. L'ensemble monolithique peut également être réalisé à partir d'un procédé de moulage ou d'injection d'un matériau liquide ou pâteux à l'intérieur d'un moule. Un tel ensemble monolithique peut aussi être réalisé par un procédé de fabrication additive ou par impression tridimensionnelle permettant notamment la réalisation de pièces monolithiques de formes particulièrement complexes à fabriquer par des procédés plus conventionnels.

Avantageusement, les moyens de rappel élastique peuvent comporter un groupe de quatre ailettes reliées entre elles et agencées parallèlement les unes par rapport aux autres pour définir une forme de H, chacune des quatre ailettes comportant une extrémité proximale et une extrémité distale, chaque ailette étant apte à se déformer au moins en flexion et en torsion entre l'extrémité proximale et l'extrémité distale lors du déplacement relatif en rotation du (ou des) organe(s) de filtrage par rapport à la première structure, les quatre ailettes étant solidarisées entre elles au niveau de leur extrémité proximale respective pour former une zone de jonction.

En d'autres termes, les quatre ailettes reliées entre elles au niveau de la zone de jonction permettent directement de solidariser entre eux les deux organes de filtrage. Ces deux organes de filtrage sont aptes à se déplacer en rotation par rapport à la première structure grâce à la déformation des quatre ailettes entre leur extrémité distale et leur extrémité proximale.

De façon avantageuse, la forme de H définie par les quatre ailettes peut être agencée dans un plan parallèle à un plan défini par deux axes de rotation des premières liaisons de type pivot respectivement de chaque organe de filtrage par rapport à la première structure.

Ainsi, la zone de jonction formée par la portion centrale de la forme de H s'étend suivant une direction longitudinale correspondant à une direction s'étendant entre une zone avant et une zone arrière de l'équipement. De plus, une telle zone de jonction est orientée sensiblement perpendiculairement à une direction transversale correspondant à une direction s'étendant entre une zone latérale gauche et une zone latérale droite de l'équipement.

En pratique, les quatre ailettes peuvent être respectivement de même longueur.

De cette manière, la zone de jonction est alors agencée au niveau d'un plan de symétrie antéropostérieur du mécanisme et chaque couple d'ailettes solidaires d'un même organe de filtrage peut se déformer symétriquement par rapport à ce plan de symétrie antéropostérieur.

Selon un exemple de réalisation avantageux de l'invention, les quatre ailettes peuvent comporter respectivement chacune une section transversale dont la forme est choisie notamment parmi le groupe comportant les formes carrée, rectangulaire, prismatique, en I, en H, elliptique et ronde.

Le choix de telles formes de la section transversale des ailettes permet en effet d'adapter un moment quadratique de la section des ailettes qui, dans le domaine de la résistance des matériaux (RDM), est une grandeur caractéristique de la géométrie d'une section et se définit par rapport à un axe ou un point. Un tel moment quadratique permet alors de calculer la résistance et la déformation de poutres sollicitées en torsion et en flexion. Ainsi, le choix de telles formes de la section transversale des ailettes permet d'adapter la capacité de ces ailettes à se déformer lors des déplacements relatifs en rotation du (ou des) organe(s) de filtrage par rapport à la première structure.

Avantageusement, les quatre ailettes peuvent comporter respectivement une section transversale de même forme.

Ainsi, les quatre ailettes peuvent comporter un même moment quadratique et se déformer de façon similaire si celles-ci sont également de même longueur.

En pratique, chaque organe de filtrage peut comporter deux branches et au moins une poutre transversale reliant entre elles les deux branches, les deux branches étant également reliées entre elles par deux ailettes opposées l'une par rapport à l'autre et formant partie du groupe de quatre ailettes, les deux ailettes opposées étant agencées coaxialement de part et d'autre de la zone de jonction.

Autrement dit, les organes de filtrage peuvent comporter un large orifice traversant ménagé entre les deux branches. Un tel agencement permet en outre de ne pas alourdir inutilement le mécanisme de filtrage ainsi formé. Par suite, les extrémités distales de deux ailettes opposées coopèrent avec les deux branches et peuvent être agencées sensiblement parallèlement par rapport à la (ou aux) poutre(s) transversale(s).

Selon un exemple de réalisation avantageux de l'invention, la (ou les) poutre(s) transversale(s) peu(ven)t comporter au moins un évidement et chaque organe de filtrage peut comporter au moins une masse battante rapportée dans le (ou les) évidement(s).

En d'autres termes, une masse battante annexe peut être rapportée et solidarisée avec chaque organe de filtrage de manière à permettre l'adaptation de la plage de fréquences du mécanisme de filtrage des vibrations à celle des vibrations à absorber en fonction de l'équipement avec lequel le mécanisme est associé ou encore en fonction de l'aéronef dans lequel un tel équipement est agencé. En effet, en modifiant la masse de la masse battante, on peut alors modifier le comportement d'absorption des vibrations d'un tel mécanisme de filtrage.

Une telle masse battante peut notamment se présenter sous la forme d'une ou plusieurs lames métalliques empilées les unes sur les autres dans l'évidement. En effet, en ajoutant ou en retirant des lames métalliques sur un organe de filtrage, la fréquence propre du système peut être adaptée à l'aéronef ou au type d'équipement sur lequel un tel mécanisme de filtrage est rapporté.

En outre, de telles lames métalliques peuvent être solidarisées par boulonnage au moyen de vis traversant des trous de forme complémentaire ménagés dans la (ou les) poutre(s) transversale(s).

De telles lames métalliques peuvent avantageusement être réalisées dans un matériau à forte densité tel que de l'acier ou de la fonte tandis que les organes de filtrage peuvent quant à eux être avantageusement réalisés en aluminium, par exemple.

Par ailleurs selon le type d'aéronef, la direction des vibrations à filtrer, l'amplitude ou la plage de fréquences des vibrations à absorber, le mécanisme de filtrage peut se présenter sous diverses formes particulières.

Ainsi selon un premier exemple de réalisation de l'invention, les deux branches d'un premier organe de filtrage et les deux branches d'un second organe de filtrage peuvent être de même longueur.

Autrement dit, les organes de filtrage peuvent être similaires et agencés symétriquement par rapport à la zone de jonction les reliant.

Selon un second exemple de réalisation de l'invention, les deux branches d'un premier organe de filtrage et les deux branches d'un second organe de filtrage peuvent être de longueurs distinctes.

Dans ce cas, les deux organes de filtrage ne sont alors pas agencés symétriquement par rapport à la zone de jonction. Un tel agencement peut notamment permettre de réduire la masse globale du mécanisme de filtrage en augmentant la longueur, et donc le bras de levier avec lequel les efforts sont transmis d'un organe de filtrage à l'équipement, des branches de l'un des deux organes de filtrage par rapport l'autre.

La présente invention a aussi pour objet un siège constituant un équipement pourvu d'au moins un mécanisme de filtrage des vibrations précité.

Selon l'invention, la première structure comporte quatre pieds indépendants, chaque pied comportant d'une part une embase plane destinée à être solidarisée en liaison de type encastrement avec un plancher du fuselage et d'autre part des premiers moyens de guidage en rotation aptes à former tout ou partie de la première liaison de type pivot à un degré de liberté en rotation entre deux zones coaxiales de chaque organe de filtrage et chaque pied.

Autrement dit, les quatre pieds peuvent être rapportés au contact du plancher du fuselage d'un aéronef et maintenus immobiles au moyen d'organes de solidarisation réversibles tels que des vis, écrous ou analogues. Par ailleurs, les premiers moyens de guidage en rotation peuvent comporter des silentblocs constitués en tout ou partie d'un matériau souple tel du caoutchouc permettant d'absorber des chocs et des vibrations entre la première structure et les organes de filtrage suivant notamment des directions longitudinales ou transversales, c'est-à-dire suivant sensiblement un plan défini par le plancher d'un aéronef.

De tels premiers moyens de guidage en rotation peuvent également être réalisés par des paliers tels des bagues formées dans un matériau à faible coefficient de frottement ou encore des roulements à billes ou à aiguilles.

En pratique, la seconde structure du siège peut comporter deux arceaux en L et quatre pièces intermédiaires de liaison, chaque arceau en L comportant d'une part un montant en élévation solidarisé en liaison de type encastrement avec un baquet du siège et d'autre part un longeron horizontal solidarisé en liaison de type encastrement avec deux pièces intermédiaires de liaison agencées respectivement au niveau d'une extrémité avant de chaque longeron horizontal et d'une extrémité arrière de chaque longeron horizontal, les deux pièces intermédiaires de liaison solidarisées avec un même longeron horizontal coopérant chacune avec des organes de filtrage distincts, chaque pièce intermédiaire de liaison comportant des seconds moyens de guidage en rotation aptes à former tout ou partie de la seconde liaison de type pivot à un degré de liberté en rotation entre chaque organe de filtrage et les extrémités avant et arrière de chaque longeron horizontal.

Par suite, les quatre pièces intermédiaires de liaison peuvent être maintenues immobiles par rapport aux deux longerons horizontaux au moyen d'organes de solidarisation réversibles tels que des vis, écrous ou analogues. Par ailleurs, les seconds moyens de guidage en rotation peuvent comporter des silentblocs constitués en tout ou partie d'un matériau souple tel du caoutchouc permettant d'absorber des chocs et des vibrations entre la seconde structure et les organes de filtrage suivant notamment des directions longitudinales ou transversales telles que définies ci-dessus.

De tels seconds moyens de guidage en rotation peuvent également être réalisés par des paliers tels des bagues formées dans un matériau à faible coefficient de frottement ou encore des roulements à billes ou à aiguilles.

Selon un exemple de réalisation avantageux de l'invention, chaque pièce intermédiaire de liaison peut comporter des moyens de butée aptes à limiter le débattement en rotation des organes de filtrage par rapport aux quatre pieds indépendants, les moyens de butée de chaque pièce intermédiaire de liaison coopérant avec un orifice traversant ménagé à l'intérieur de chaque pied.

De tels moyens de butée peuvent ainsi être agencés au niveau de chaque pied et par exemple se présenter respectivement chacun sous la forme d'un axe passant au travers d'un orifice traversant. Ces moyens de butée peuvent également permettre, en se déformant plastiquement, d'absorber une partie de l'énergie cinétique lors d'un accident de l'aéronef.

L'invention et ses avantages apparaîtront avec plus de détails dans le cadre de la description qui suit avec des exemples donnés à titre illustratif en référence aux figures annexées qui représentent :
- la figure 1, une vue en perspective d'un équipement muni d'un mécanisme de filtrage selon une première variante conforme à l'invention,
- la figure 2, une vue de dessous de l'équipement muni du mécanisme de filtrage selon la première variante conforme à l'invention,
- la figure 3, une vue de dessous selon un grossissement du mécanisme de filtrage conforme à l'invention,
- les figures 4 et 5, des vues en perspective illustrant les liaisons entre les différentes pièces constituant un mécanisme de filtrage conforme à l'invention, et
- la figure 6, une vue en perspective d'un équipement muni d'un mécanisme de filtrage selon une seconde variante conforme à l'invention.

Les éléments présents dans plusieurs figures distinctes sont affectés d'une seule et même référence.

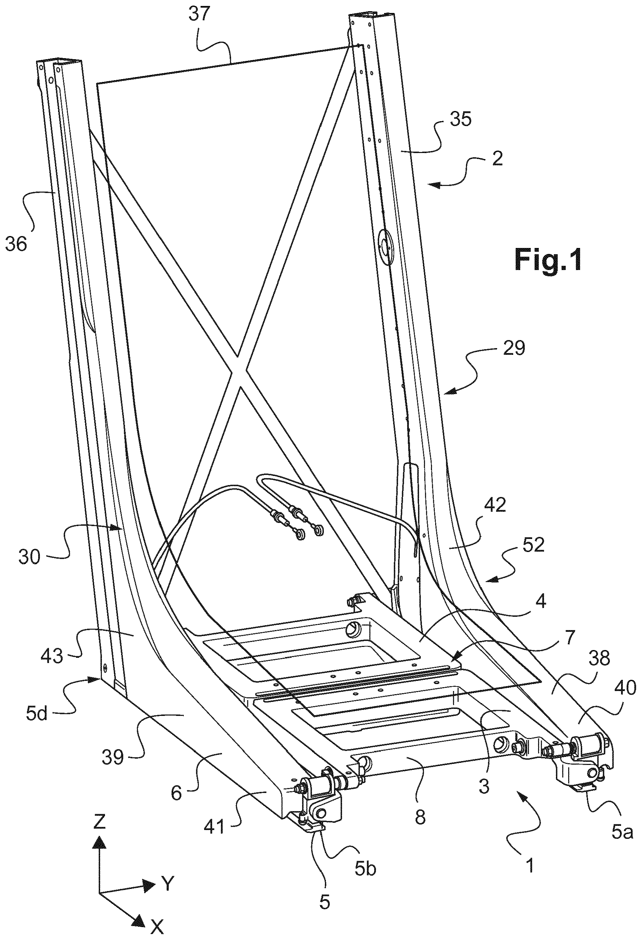

On note que trois directions X, Y et Z orthogonales les unes par rapport aux autres sont représentées sur les figures 1 à 6.

La direction X est dite longitudinale dans la mesure où le terme « longueur » est relatif à une dimension longitudinale de l'équipement et du mécanisme de filtrage selon cette direction longitudinale X.

Une autre direction Y est dite transversale. Le terme « largeur » est relatif à une dimension transverse du dispositif selon cette direction transversale.

Enfin, une troisième direction Z est dite d'élévation et correspond aux dimensions en hauteur des structures décrites. Le terme « épaisseur » est alors relatif à une dimension en élévation du dispositif selon cette direction d'élévation.

Comme déjà évoqué l'invention se rapporte à un mécanisme de filtrage de vibrations destiné à être agencé dans un aéronef et à un équipement pour aéronef, tel un siège notamment, équipé de ce mécanisme de filtrage des vibrations.

Tel que représenté à la figure 1, un siège 2 peut être équipé d'un mécanisme de filtrage 1 selon une première variante pour filtrer les vibrations transmises au siège 2 par un fuselage d'aéronef tel un avion ou un giravion notamment.

En outre, un tel siège 2 comporte au moins un baquet 37 pour servir d'assise et de dossier à un passager ou un pilote de l'aéronef. Un tel baquet 37 est alors assemblé et solidarisé avec deux arceaux en L 29 et 30 comportant respectivement chacun un montant en élévation 35, 36 s'étendant sensiblement suivant la direction en élévation Z et un longeron horizontal 38, 39 s'étendant sensiblement selon la direction longitudinale X.

Un tel siège 2 est alors équipé d'un mécanisme de filtrage 1 selon une première variante comportant un couple d'organes de filtrage 3 et 4 solidarisés respectivement chacun d'une part avec une première structure 5 destinée à être reliée au fuselage de l'aéronef et d'autre part avec une deuxième structure 6 du siège 2 comportant les deux arceaux en L 29 et 30.

Les deux organes de filtrage 3 et 4 sont alors solidarisés respectivement chacun selon une première liaison de type pivot à un degré de liberté en rotation avec la première structure 5 et selon une seconde liaison de type pivot à un degré de liberté en rotation avec la seconde structure 6.

Chaque seconde liaison de type pivot à un degré de liberté en rotation est alors réalisée respectivement au niveau d'extrémités avant 40, 41 et d'extrémités arrière 42, 43 des longerons horizontaux 38 et 39 des deux arceaux en L 29 et 30.

Par ailleurs, un tel mécanisme de filtrage 1 comporte également des moyens de rappel élastique 7 comportant une capacité de déformation lors d'un déplacement relatif en rotation d'au moins un des organes de filtrage 3 et 4 par rapport à la première structure 5. De tels moyens de rappel élastique 7 présentent ainsi une raideur prédéterminée apte à générer une force de rappel, ou un couple de rappel, s'opposant au déplacement relatif en rotation du ou des organes de filtrage 3 et 4 par rapport à la première structure 5.

Selon l'invention, les organes de filtrage 3 et 4 forment avec les moyens de rappel élastique 7 un ensemble monolithique 8 déformable élastiquement lors des mouvements de rotation autour d'un axe 14, 15 parallèle à la direction Y du ou des organes de filtrage 3 et 4 par rapport à la première structure 5.

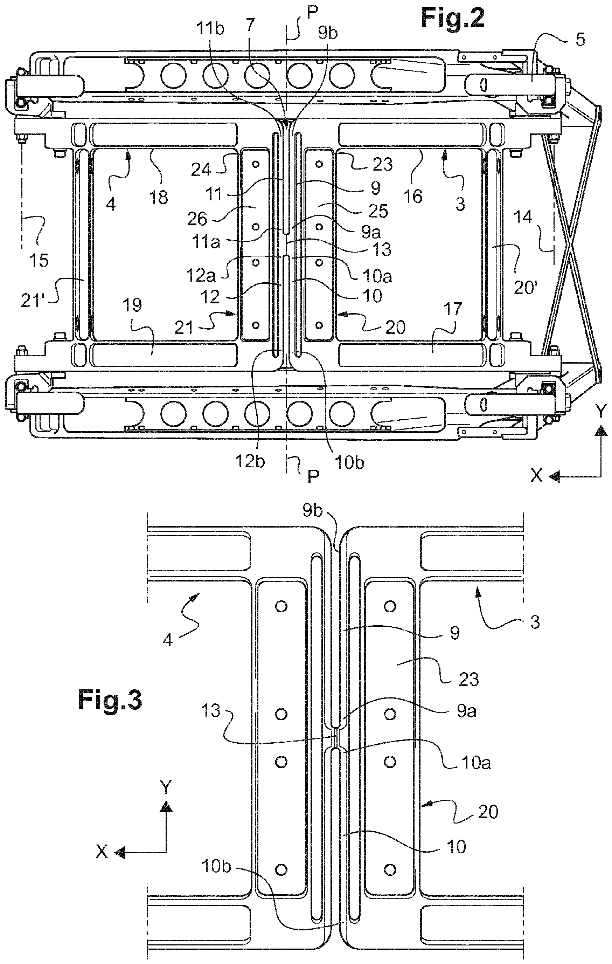

Tel que représenté à la figure 2 selon la première variante du mécanisme de filtrage 1, chaque organe de filtrage 3 et 4 peut être agencé symétriquement de part et d'autre d'un plan médian de symétrie P parallèle à un plan YZ. Par ailleurs, chaque organe de filtrage 3 et 4 comporte deux branches 16, 18 et 17, 19 agencées parallèlement par rapport à la direction longitudinale X et au moins une poutre transversale 20, 21 reliant entre elles les deux branches 16, 18 et 17, 19, cette poutre transversale 20, 21 étant agencée quant à elle parallèlement par rapport à la direction transversale Y.

De cette manière, les organes de filtrage 3 et 4 selon la figure 2 forment respectivement deux cadres rigides reliés entre eux par les moyens de rappel élastique 7. Chaque cadre rigide peut ainsi comporter deux branches 16, 18 et 17, 19 reliées respectivement entre elles par une première poutre transversale 20, 21 agencée à proximité des moyens de rappel élastique 7 et par une seconde poutre transversale 20', 21' agencée à proximité de l'axe de rotation 14, 15.

Ainsi, les deux branches 16, 18 et 17, 19 d'un même organe de filtrage 3 et 4 sont également reliées entre elles par les moyens de rappel élastique 7 au niveau du plan médian de symétrie P.

Tels que représentés, les moyens de rappel élastique 7 comportent quatre ailettes 9, 10, 11 et 12 reliées entre elles et agencées parallèlement les unes par rapport aux autres pour définir une forme de H. Chaque ailette 9, 10, 11 et 12 s'étend ainsi suivant une direction parallèle à la direction transversale Y entre une extrémité proximale 9a, 10a, 11a et 12a et une extrémité distale 9b, 10b, 11b et 12b.

En outre, chaque ailette 9, 10, 11 et 12 présente une capacité de déformation au moins en flexion et en torsion entre son extrémité proximale 9a, 10a, 11a et 12a et son extrémité distale 9b, 10b, 11b et 12b lors d'un mouvement de rotation autour d'un axe 14, 15 parallèle à la direction Y du ou des organe(s) de filtrage 3 et 4 par rapport à la première structure 5.

Les quatre ailettes 9, 10, 11 et 12 sont solidarisées entre elles au niveau du plan médian de symétrie P par leurs extrémités proximales 9a, 10a, 11a et 12a respectives. Ainsi, les quatre ailettes 9, 10, 11 et 12 forment une zone de jonction 13 dont au moins une section transversale est agencée parallèlement par rapport au plan médian de symétrie P.

Les extrémités distales 9b, 10b, 11b et 12b respectives des quatre ailettes 9, 10, 11 et 12 sont quant elles solidaires avec les branches 16, 18 et 17, 19 des organes de filtrage 3 et 4 et permettent ainsi de former l'ensemble monolithique 8 déformable avec les organes de filtrage 3 et 4.

Par ailleurs, les extrémités proximales 9a, 10a, 11a et 12a sont donc solidaires de la zone de jonction 13 entre les deux organes de filtrage 3 et 4. Ces extrémités proximales 9a, 10a, 11a et 12a sont ainsi aptes à se déplacer suivant un mouvement de translation rectiligne suivant la direction en élévation Z. Cependant, lors du mouvement de rotation autour des axes de rotation 14, 15 parallèles à la direction Y des organes de filtrage 3 et 4 formant deux cadres rigides, les extrémités distales 9b, 10b, 11b et 12b respectives des quatre ailettes 9, 10, 11 et 12 décrivent quant à elles des trajectoires d'arc de cercles autour des axes de rotation 14, 15.

Par suite, la différence de trajectoires rectilignes pour les extrémités proximales 9a, 10a, 11a et 12a et circulaires pour les extrémités distales 9b, 10b, 11b et 12b respectives des quatre ailettes 9, 10, 11 et 12 permet alors de générer des sollicitations en torsion et flexion dans les quatre ailettes 9, 10, 11 et 12 aptes à se déformer élastiquement.

De telles sollicitations en torsion sont ainsi dues au mouvement de rotation relatif entre les extrémités distales 9b, 10b, 11b et 12b qui pivotent par rapport aux extrémités proximales 9a, 10a, 11a et 12a. Les sollicitations en flexion sont quant à elles générées par le déplacement relatif le long d'un axe parallèle à l'axe longitudinal X des extrémités distales 9b, 10b, 11b et 12b par rapport aux extrémités proximales 9a, 10a, 11a et 12a.

Par ailleurs, de telles ailettes 9, 10, 11 et 12 comportent avantageusement une même longueur et une section transversale de même forme qui peut être notamment choisie parmi le groupe comportant les formes carrée, rectangulaire, prismatique, en I, en H, elliptique et ronde.

Tel que représenté à la figure 3, chaque poutre transversale 20 et 21 comporte une face inférieure orientée sensiblement parallèlement par rapport au plan XY. En outre, une telle face inférieure d'une poutre transversale 20 et 21 est destinée à être agencée en regard d'un plancher de l'aéronef et peut comporter au moins un évidement 23 et 24 dans lequel au moins une masse battante 25 et 26 peut être rapportée et maintenue en position par des moyens de solidarisations tels des boulons non représentés.

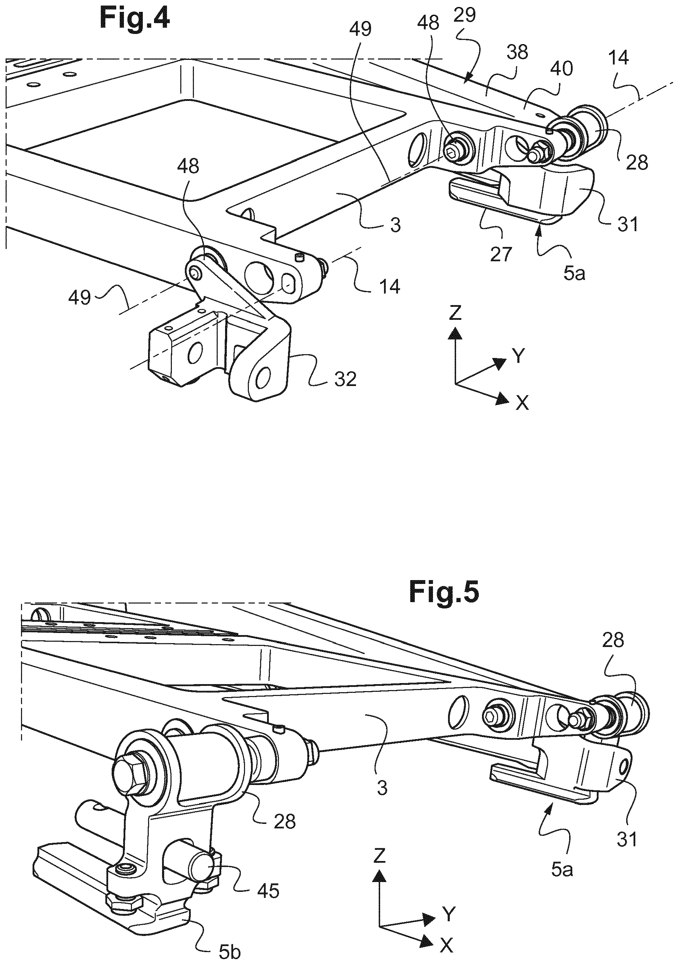

Telle que représentée aux figures 4 et 5, la première structure 5 comporte quatre pieds indépendants 5a, 5b, 5c et 5d. Chaque pied 5a, 5b, 5c et 5d comporte ainsi une embase plane 27 destinée à être solidarisée en liaison de type encastrement avec un plancher du fuselage de l'aéronef.

Par ailleurs, chaque pied 5a, 5b, 5c et 5d comporte également des premiers moyens de guidage en rotation 28 aptes à former tout ou partie de la première liaison de type pivot à un degré de liberté en rotation d'axes de rotation 14 et 15 entre deux zones coaxiales de chaque organe de filtrage 3 et 4 et chaque pied 5a, 5b, 5c et 5d. De tels premiers moyens de guidage en rotation 28 sont ainsi agencés coaxialement avec deux axes de rotation 14 et 15 correspondant aux premières liaisons de type pivot respectivement de chaque organe de filtrage 3 et 4 par rapport quatre pieds indépendants 5a, 5b, 5c et 5d.

En outre, les longerons horizontaux 38 et 39 des deux arceaux en L 29 et 30 sont solidarisés au niveau de leur extrémité avant 40, 41 respective et leur extrémité arrière 42, 43 respective avec quatre pièces intermédiaires de liaison 31, 32, 33 et 34.

Chaque pièce intermédiaire de liaison 31, 32, 33 et 34 coopère avec des seconds moyens de guidage en rotation 48 aptes à former tout ou partie de la seconde liaison de type pivot à un degré de liberté en rotation entre chaque organe de filtrage 3 et 4 et les extrémités avant 40, 41 et arrière 42, 43 de chaque longeron horizontal 38, 39. De tels seconds moyens de guidage en rotation 48 sont alors agencés coaxialement au niveau d'axes de rotation 49 et 50 correspondant aux secondes liaisons de type pivot à un degré de liberté en rotation.

En outre, de tels axes de rotation 14, 15, 49 et 50 sont agencés respectivement chacun parallèlement par rapport à la direction transversale Y.

Enfin tel que représenté à la figure 5, chaque pièce intermédiaire de liaison 31, 32, 33 et 34 comporte des moyens de butée 45 aptes à limiter le débattement en rotation des organes de filtrage 3 et 4 par rapport aux quatre pieds indépendants 5a, 5b, 5c et 5d. De tels moyens de butée 45 peuvent notamment comporter un axe coopérant avec un orifice traversant 46 ménagé à l'intérieur de chaque pied 5a, 5b, 5c et 5d.

De tels moyens de butée 45 peuvent par ailleurs avoir une capacité de déformation plastique importante permettant d'absorber, au moins partiellement, une partie de l'énergie cinétique lors d'un accident de l'aéronef ou plus généralement d'un atterrissage violent.

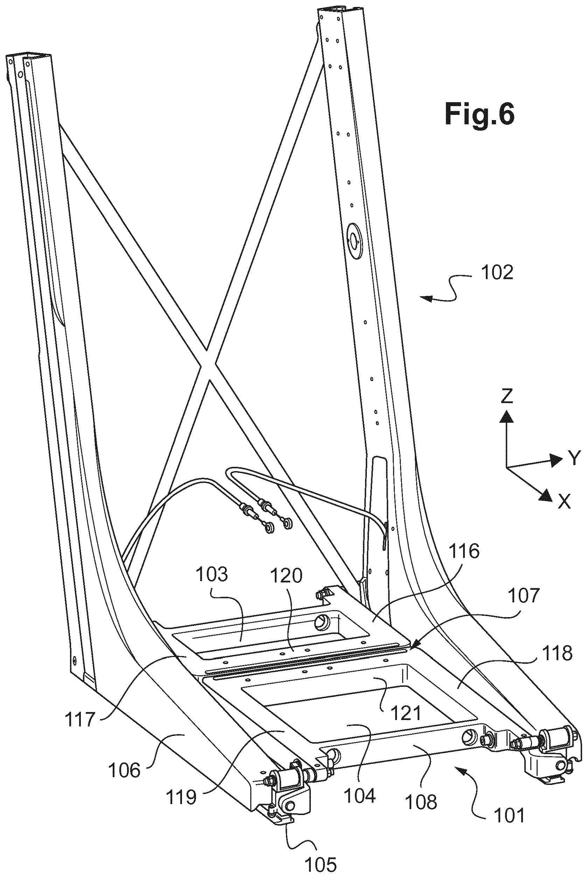

Telle que représentée à la figure 6, une seconde variante d'un mécanisme de filtrage 101 peut également comporter un premier organe de filtrage 103 et un second organe de filtrage 104. Selon cette représentation, le premier organe de filtrage 103 comporte deux branches 116 et 117 reliées entre elles par une poutre transversale 120 et le second organe de filtrage 104 comporte quant à lui deux branches 118 et 119 reliées entre elles par une poutre transversale 121.

Selon cette seconde variante du mécanisme de filtrage 101, les branches 116 et 117 du premier organe de filtrage 103 sont alors plus courtes que les deux branches 118 et 119 du second organe de filtrage 104.

Cependant comme pour la première variante, un tel mécanisme de filtrage 101 comporte également des moyens de rappel élastique 107 comportant une capacité de déformation lors d'un déplacement relatif en rotation d'au moins un des organes de filtrage 103 et 104 par rapport à la première structure 105.

De même, les organes de filtrage 103 et 104 forment avec les moyens de rappel élastique 107 un ensemble monolithique 108 déformable élastiquement lors des mouvements de rotation du ou des organes de filtrage 103 et 104 par rapport à la première structure 105.

Un tel mécanisme de filtrage 101 peut ainsi équiper un siège 102 pour aéronef pour être alors agencé à l'interface entre le plancher d'un fuselage d'aéronef et un baquet permettant d'accueillir un passager ou un pilote de l'aéronef.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent. L'objet de l'invention est défini par les revendications suivantes.

## Revendications

1. Mécanisme (1, 101) de filtrage de vibrations destiné à être agencé à l'interface entre un fuselage d'un aéronef et un équipement (2, 102) dudit aéronef, ledit mécanisme de filtrage (1, 101) comportant un couple d'organes de filtrage (3, 103) et (4, 104) solidarisés respectivement chacun d'une part avec une première structure (5, 105) destinée à être reliée audit fuselage et d'autre part avec une deuxième structure (6, 106) dudit équipement (2, 102), chaque organe de filtrage (3, 103) et (4, 104) étant solidarisé selon une première liaison de type pivot à un degré de liberté en rotation avec ladite première structure (5, 105) et selon une seconde liaison de type pivot à un degré de liberté en rotation avec ladite seconde structure (6, 106), ledit mécanisme de filtrage (1, 101) comportant des moyens de rappel élastique (7, 107) aptes à se déformer lors d'un déplacement relatif en rotation d'au moins un desdits organes de filtrage (3, 103) et (4, 104) par rapport à ladite première structure (5, 105), lesdits moyens de rappel élastique (7, 107) présentant une raideur prédéterminée apte à générer une force de rappel s'opposant audit déplacement relatif en rotation dudit au moins un desdits organes de filtrage (3, 103) et (4, 104) par rapport à ladite première structure (5, 105),
**caractérisé en ce que** lesdits organes de filtrage (3, 103) et (4, 104) forment avec lesdits moyens de rappel élastique (7, 107) un ensemble monolithique (8, 108) déformable élastiquement.

2. Mécanisme selon la revendication 1,
**caractérisé en ce que** lesdits moyens de rappel élastique (7, 107) comportent un groupe de quatre ailettes (9), (10), (11) et (12) reliées entre elles et agencées parallèlement les unes par rapport aux autres pour définir une forme de H, chacune desdites quatre ailettes (9), (10), (11) et (12) comportant une extrémité proximale (9a), (10a), (11a) et (12a) et une extrémité distale (9b), (10b), (11b) et (12b), chaque ailette (9), (10), (11) et (12) étant apte à se déformer au moins en flexion et en torsion entre ladite extrémité proximale (9a), (10a), (11a) et (12a) et ladite extrémité distale (9b), (10b), (11b) et (12b) lors dudit déplacement relatif en rotation dudit au moins un desdits organes de filtrage (3, 103) et (4, 104) par rapport à ladite première structure (5, 105), lesdites quatre ailettes (9), (10), (11) et (12) étant solidarisées entre elles au niveau de leur extrémité proximale (9a), (10a), (11a) et (12a) respective pour former une zone de jonction (13).

3. Mécanisme selon la revendication 2,
**caractérisé en ce que** ladite forme de H définie par lesdites quatre ailettes (9), (10), (11) et (12) est agencée dans un plan parallèle à un plan défini par deux axes de rotation (14) et (15) desdites premières liaisons de type pivot respectivement de chaque organe de filtrage (3, 103) et (4, 104) par rapport à ladite première structure (5, 105).

4. Mécanisme selon l'une quelconque des revendications 2 à 3,
**caractérisé en ce que** lesdites quatre ailettes (9), (10), (11) et (12) sont respectivement de même longueur.

5. Mécanisme selon l'une quelconque des revendications 2 à 4,
**caractérisé en ce que** lesdites quatre ailettes (9), (10), (11) et (12) comportent respectivement chacune une section transversale dont la forme est choisie parmi le groupe comportant les formes carrée, rectangulaire, prismatique, en I, en H, elliptique et ronde.

6. Mécanisme selon l'une quelconque des revendications 2 à 5,
**caractérisé en ce que** lesdites quatre ailettes (9), (10), (11) et (12) comportent respectivement une section transversale de même forme.

7. Mécanisme selon l'une quelconque des revendications 2 à 6,
**caractérisé en ce que** chaque organe de filtrage (3, 103) et (4, 104) comporte deux branches (16, 116, 18, 118) et (17, 117, 19, 119) et au moins une poutre transversale (20, 20' 120, 21,21' 121) reliant entre elles lesdites deux branches (16, 116, 18, 118) et (17, 117, 19, 119), lesdites deux branches (16, 116, 18, 118) et (17, 117, 19, 119) étant également reliées entre elles par deux ailettes opposées (9, 11) et (10, 12) l'une par rapport à l'autre et formant partie dudit groupe desdites quatre ailettes (9), (10), (11) et (12), lesdites deux ailettes opposées (9, 11) et (10, 12) étant agencées coaxialement de part et d'autre de ladite zone de jonction (13).

8. Mécanisme selon la revendication 7,
**caractérisé en ce que** ladite au moins une poutre transversale (20, 120) et (21, 121) comporte au moins un évidement (23) et (24) et **en ce que** chaque organe de filtrage (3, 103) et (4, 104) comporte au moins une masse battante (25) et (26) rapportée dans ledit au moins un évidement (23) et (24).

9. Mécanisme selon l'une quelconque des revendications 7 à 8,
**caractérisé en ce que** lesdites deux branches (16) et (17) d'un premier organe de filtrage (3) et lesdites deux branches (18) et (19) d'un second organe de filtrage (4) sont de même longueur.

10. Mécanisme selon l'une quelconque des revendications 7 à 8,
**caractérisé en ce que** lesdites deux branches (116) et (117) d'un premier organe de filtrage (103) et lesdites deux branches (118) et (119) d'un second organe de filtrage (104) sont de longueurs distinctes.

11. Siège constituant un équipement (2, 102) pourvu d'au moins un mécanisme (1, 101) selon l'une des revendications 1 à 10,
**caractérisé en ce que** ladite première structure (5, 105) comporte quatre pieds indépendants (5a), (5b), (5c) et (5d), chaque pied (5a), (5b), (5c) et (5d) comportant d'une part une embase plane (27) destinée à être solidarisée en liaison de type encastrement avec un plancher dudit fuselage et d'autre part des premiers moyens de guidage en rotation (28) aptes à former tout ou partie de ladite première liaison de type pivot à un degré de liberté en rotation entre deux zones coaxiales de chaque organe de filtrage (3, 103) et (4, 104) et chaque pied (5a), (5b), (5c) et (5d).

12. Siège selon la revendication 11,
**caractérisé en ce que** ladite seconde structure (6, 106) dudit siège comporte deux arceaux en L (29) et 30) et quatre pièces intermédiaires de liaison (31), (32), (33) et (34), chaque arceau en L (29) et 30) comportant d'une part un montant en élévation (35, 36) solidarisé en liaison de type encastrement avec un baquet (37) dudit siège et d'autre part un longeron horizontal (38, 39) solidarisé en liaison de type encastrement avec deux pièces intermédiaires de liaison (31, 33) et (32, 34) agencées respectivement au niveau d'une extrémité avant (40, 41) de chaque longeron horizontal (38, 39) et d'une extrémité arrière (42, 43) de chaque longeron horizontal (38, 39), lesdites deux pièces intermédiaires de liaison (31) et (33), (32) et (34) solidarisées avec un même longeron horizontal (38, 39) coopérant chacune avec des organes de filtrage distincts (3, 103) et (4, 104), chaque pièce intermédiaire de liaison (31), (32), (33) et (34) coopérant avec des seconds moyens de guidage en rotation (48) aptes à former tout ou partie de ladite seconde liaison de type pivot à un degré de liberté en rotation entre chaque organe de filtrage (3, 103) et (4, 104) et les extrémités avant (40, 41) et arrière (42, 43) de chaque longeron horizontal (38, 39).

13. Siège selon la revendication 12,
**caractérisé en ce que** chaque pièce intermédiaire de liaison (31), (32), (33) et (34) comporte des moyens de butée (45) aptes à limiter le débattement en rotation desdits organes de filtrage (3, 103) et (4, 104) par rapport auxdits quatre pieds indépendants (5a), (5b), (5c) et (5d), lesdits moyens de butée (45) de chaque pièce intermédiaire de liaison (31), (32), (33) et (34) coopérant avec un orifice traversant (46) ménagé à l'intérieur de chaque pied (5a), (5b), (5c) et (5d).

## Patentansprüche

1. Schwingungsfiltermechanismus (1, 101) zur Anbringung an der Schnittstelle zwischen einem Rumpf eines Luftfahrzeugs und einer Ausrüstung (2, 102) des Luftfahrzeugs, wobei der Filtermechanismus (1, 101) ein Paar von Filterelementen (3, 103) und (4, 104) umfasst, die jeweils einerseits an einer ersten Struktur (5, 105), die dazu bestimmt ist, mit dem Rumpf verbunden zu werden, und andererseits an einer zweiten Struktur (6, 106) der Ausrüstung (2, 102) befestigt sind, wobei jedes Filterelement (3, 103) und (4, 104) in einer ersten schwenkbaren Verbindung mit einem Rotationsfreiheitsgrad an der ersten Struktur (5, 105) und in einer zweiten schwenkbaren Verbindung mit einem Rotationsfreiheitsgrad an der zweiten Struktur (6, 106) befestigt ist, wobei der Filtermechanismus (1, 101) elastische Rückstellmittel (7, 107) umfasst, die eingerichtet sind, sich während einer relativen Drehbewegung mindestens eines der Filterelemente (3, 103) und (4, 104) in Bezug auf die erste Struktur (5, 105) zu verformen, wobei die elastischen Rückstellmittel (7, 107) eine vorgegebene Steifigkeit aufweisen, die eingerichtet ist, eine Rückstellkraft zu erzeugen, die der relativen Drehbewegung des mindestens einen der Filterelemente (3, 103) und (4, 104) in Bezug auf die erste Struktur (5, 105) entgegenwirkt,
**dadurch gekennzeichnet, dass** die Filterelemente (3, 103) und (4, 104) mit den elastischen Rückstellmitteln (7, 107) eine elastisch verformbare monolithische Anordnung (8, 108) bilden.

2. Mechanismus nach Anspruch 1,
**dadurch gekennzeichnet, dass** die elastischen Rückstellmittel (7, 107) eine Gruppe von vier Rippen (9), (10), (11) und (12) umfassen, die miteinander verbunden und parallel zueinander angeordnet sind, um eine H-Form zu definieren, wobei jede der vier Rippen (9), (10), (11) und (12) ein proximales Ende (9a), (10a), (11a) und (12a) und ein distales Ende (9b), (10b), (11b) und (12b) aufweist, wobei jede Rippe (9), (10), (11) und (12) eingerichtet ist, sich zumindest in Flexion und Torsion zwischen dem proximalen Ende (9a), (10a), (11a) und (12a) und dem distalen Ende (9b), (10b), (11b) und (12b) während der relativen Drehbewegung des mindestens einen der Filterelemente (3, 103) und (4, 104) in Bezug auf die erste Struktur (5, 105) zu verformen, wobei die vier Rippen (9), (10), (11) und (12) an ihren jeweiligen proximalen Enden (9a), (10a), (11a) und (12a) unter Bildung einer Verbindungszone (13) miteinander verbunden sind.

3. Mechanismus nach Anspruch 2,
**dadurch gekennzeichnet, dass** die durch die vier Rippen (9), (10), (11) und (12) definierte H-Form in einer Ebene parallel zu einer Ebene angeordnet ist, die durch zwei Drehachsen (14) und (15) der ersten Schwenkverbindungen jedes Filterelements (3, 103) und (4, 104) in Bezug auf die erste Struktur (5, 105) definiert ist.

4. Mechanismus nach einem der Ansprüche 2 bis 3,
**dadurch gekennzeichnet, dass** die vier Rippen (9), (10), (11) und (12) jeweils von gleicher Länge sind.

5. Mechanismus nach einem der Ansprüche 2 bis 4,
**dadurch gekennzeichnet, dass** die vier Rippen (9), (10), (11) und (12) jeweils einen Querschnitt aufweisen, der jeweils ausgewählt ist aus der Gruppe bestehend aus quadratischen, rechteckigen, prismatischen, I-förmigen, H-förmigen, elliptischen und runden Formen.

6. Mechanismus nach einem der Ansprüche 2 bis 5,
**dadurch gekennzeichnet, dass** die vier Rippen (9), (10), (11) und (12) jeweils einen Querschnitt der gleichen Form aufweisen.

7. Mechanismus nach einem der Ansprüche 2 bis 6,
**dadurch gekennzeichnet, dass** jedes Filterelement (3, 103) und (4, 104) zwei Zweige (16, 116, 18, 118) und (17, 117, 19, 119) und mindestens einen Querträger (20, 20' 120, 21, 21' 121) aufweist, der die beiden Zweige (16, 116, 18, 118) und (17, 117, 19, 119) verbindet, wobei die beiden Zweige (16, 116, 18, 118) und (17, 117, 19, 119) ferner durch zwei einander gegenüberliegende Rippen (9, 11) und (10, 12) miteinander verbunden sind, die Teil der Gruppe der vier Rippen (9), (10), (11) und (12) sind, wobei die beiden einander gegenüberliegenden Rippen (9, 11) und (10, 12) koaxial auf beiden Seiten der Verbindungszone (13) angeordnet sind.

8. Mechanismus nach Anspruch 7,
**dadurch gekennzeichnet, dass** der mindestens eine Querträger (20, 120) und (21, 121) mindestens eine Aussparung (23) und (24) aufweist und dass jedes Filterelement (3, 103) und (4, 104) mindestens eine Schwungmasse (25) und (26) aufweist, die in die mindestens eine Aussparung (23) und (24) versetzt ist.

9. Mechanismus nach einem der Ansprüche 7 bis 8,
**dadurch gekennzeichnet, dass** die beiden Zweige (16) und (17) eines ersten Filterelements (3) und die beiden Zweige (18) und (19) eines zweiten Filterelements (4) von gleicher Länge sind.

10. Mechanismus nach einem der Ansprüche 7 bis 8,
**dadurch gekennzeichnet, dass** die beiden Zweige (116) und (117) eines ersten Filterelements (103) und die beiden Zweige (118) und (119) eines zweiten Filterelements (104) unterschiedliche Längen aufweisen.

11. Sitz, der eine mit mindestens einem Mechanismus (1, 101) nach einem der Ansprüche 1 bis 10 versehene Ausrüstung (2, 102) bildet,
**dadurch gekennzeichnet, dass** die erste Struktur (5, 105) vier unabhängige Füße (5a), (5b), (5c) und (5d) aufweist, wobei jeder Fuß (5a), (5b), (5c) und (5d) einerseits eine flache Basis (27), die dazu bestimmt ist, in einer bündigen Verbindung an einem Boden des Rumpfes befestigt zu werden, und andererseits erste Rotationsführungsmittel (28) aufweist, die geeignet sind, die erste Schwenkverbindung mit einem Rotationsfreiheitsgrad zwischen zwei koaxialen Zonen jedes Filterelements (3, 103) und (4, 104) und jedem Fuß (5a), (5b), (5c) und (5d) ganz oder teilweise zu bilden.

12. Sitz nach Anspruch 11,
**dadurch gekennzeichnet, dass** die zweite Struktur (6, 106) des Sitzes zwei L-Arme (29) und 30) und vier Zwischenverbindungsteile (31), (32), (33) und (34) umfasst, wobei jeder L-Arm (29) und (30) einerseits einen aufrechten Pfosten (35, 36), der in bündiger Verbindung an einer Sitzschale (37) des Sitzes befestigt ist, und andererseits einen horizontalen Träger (38, 39) umfasst, der in bündiger Verbindung an zwei Zwischenverbindungsteilen (31, 33) und (32, 34) befestigt ist, die jeweils an einem vorderen Ende (40, 41) jedes horizontalen Trägers (38, 39) und einem hinteren Ende (42, 43) jedes horizontalen Trägers (38, 39) angeordnet sind, wobei die beiden Zwischenverbindungsteile (31) und (33), (32) und (34), die an demselben horizontalen Träger (38, 39) befestigt sind, jeweils mit verschiedenen Filterelementen (3, 103) und (4, 104) zusammenwirken, wobei jedes Zwischenverbindungsteil (31), (32), (33) und (34) mit zweiten Drehführungsmitteln (48) zusammenwirkt, die eingerichtet sind, die zweite Schwenkverbindung mit einem Rotationsfreiheitsgrad zwischen jedem Filterelement (3, 103) und (4, 104) und den vorderen (40, 41) und hinteren (42, 43) Enden jedes horizontalen Trägers (38, 39) ganz oder teilweise zu bilden.

13. Sitz nach Anspruch 12,
**dadurch gekennzeichnet, dass** jedes Zwischenverbindungsteil (31), (32), (33) und (34) Anschlagmittel (45) aufweist, die eingerichtet sind, die Drehbewegungsfreiheit der Filterelemente (3, 103) und (4, 104) in Bezug auf die vier unabhängigen Füße (5a), (5b), (5c) und (5d) zu begrenzen, wobei die Anschlagmittel (45) jedes Zwischenverbindungsteils (31), (32), (33) und (34) mit einem Durchgangsloch (46) zusammenwirken, das in jedem Fuß (5a), (5b), (5c) und (5d) gebildet ist.

## Claims

1. Vibration filter mechanism (1, 101), which is intended to be arranged at the interface between a fuselage of an aircraft and an equipment item (2, 102) of the aircraft, the filter mechanism (1, 101) comprising a pair of filter members (3, 103) and (4, 104), which are each fixedly joined, on the one hand, to a first structure (5, 105), which is intended to be connected to the fuselage and, on the other hand, to a second structure (6, 106) of the equipment item (2, 102), respectively, each filter member (3, 103) and (4, 104) being fixedly joined in accordance with a first connection of the pivot type with a degree of rotational freedom to the first structure (5, 105) and in accordance with a second connection of the pivot type with a degree of rotational freedom to the second structure (6, 106), the filter mechanism (1, 101) comprising resilient return means (7, 107), which are capable of becoming deformed during a relative rotational movement of at least one of the filter members (3, 103) and (4, 104) in relation to the first structure (5, 105), the resilient return means (7, 107) having a predetermined rigidity, which is capable of generating a return force, which acts counter to the relative rotational movement of the at least one of the filter members (3, 103) and (4, 104) in relation to the first structure (5, 105),
**characterised in that** the filter members (3, 103) and (4, 104) form with the resilient return means (7, 107) a resiliently deformable monolithic assembly (8, 108).

2. Mechanism according to claim 1,
**characterised in that** the resilient return means (7, 107) comprise a group of four fins (9), (10), (11) and (12), which are connected to each other and which are arranged parallel with each other in order to define an H-shape, each of the four fins (9), (10), (11) and (12) comprising a proximal end (9a), (10a), (11a) and (12a) and a distal end (9b), (10b), (11b) and (12b), each fin (9), (10), (11) and (12) being capable of becoming deformed at least in terms of flexion and torsion between the proximal end (9a), (10a), (11a) and (12a) and the distal end (9b), (10b), (11b) and (12b) during the relative rotational movement of the at least one of the filter members (3, 103) and (4, 104) in relation to the first structure (5, 105), the four fins (9), (10), (11) and (12) being fixedly joined to each other in the region of the proximal end thereof (9a), (10a), (11a) and (12a) in order to form a connection zone (13).

3. Mechanism according to claim 2,
**characterised in that** the H-shape, which is defined by the four fins (9), (10), (11) and (12) is arranged in a plane parallel with a plane, which is defined by two rotation axes (14) and (15) of the first connections of the pivot type of each filter member (3, 103) and (4, 104), respectively, in relation to the first structure (5, 105).

4. Mechanism according to either claim 2 or claim 3,
**characterised in that** the four fins (9), (10), (11) and (12) are of the same length.

5. Mechanism according to any one of claims 2 to 4,
**characterised in that** the four fins (9), (10), (11) and (12) each comprise a cross-section, the shape of which is selected from the group comprising square, rectangular, prismatic, I-like, H-like, elliptical and round shapes.

6. Mechanism according to any one of claims 2 to 5,
**characterised in that** the four fins (9), (10), (11) and (12) comprise a cross-section of the same shape, respectively.

7. Mechanism according to any one of claims 2 to 6,
**characterised in that** each filter member (3, 103) and (4, 104) comprises two branches (16, 116, 18, 118) and (17, 117, 19, 119) and at least one transverse beam (20, 20', 120, 21, 21', 121), which connect the two branches (16, 116, 18, 118) and (17, 117, 19, 119) to each other, the two branches (16, 116, 18, 118) and (17, 117, 19, 119) also being connected to each other by two mutually opposite fins (9, 11) and (10, 12) and forming a portion of the group of four fins (9), (10), (11) and (12), the two opposite fins (9, 11) and (10, 12) being arranged coaxially at one side and the other of the connection zone (13).

8. Mechanism according to claim 7,
**characterised in that** the at least one transverse beam (20, 120) and (21, 121) comprises at least one recess (23) and (24) and **in that** each filter member (3, 103) and (4, 104) comprises at least one fitted swinging mass (25) and (26) in the at least one recess (23) and (24).

9. Mechanism according to either claim 7 or claim 8,
**characterised in that** the two branches (16) and (17) of a first filter member (3) and the two branches (18) and (19) of a second filter member (4) are of the same length.

10. Mechanism according to either claim 7 or claim 8,
**characterised in that** the two branches (116) and (117) of a first filter member (103) and the two branches (118) and (119) of a second filter member (104) have different lengths.

11. Seat constituting an equipment item (2, 102), which is provided with at least one mechanism (1, 101) according to any one of claims 1 to 10,
**characterised in that** the first structure (5, 105) comprises four independent feet (5a), (5b), (5c) and (5d), each foot (5a), (5b), (5c) and (5d) comprising, on the one hand, a planar base (27), which is intended to be fixedly joined with a plug-in type connection to a floor of the fuselage and, on the other hand, first rotational guiding means (28), which are capable of partially or completely forming the first connection of the pivot type with a degree of rotational freedom between two coaxial zones of each filter member (3, 103) and (4, 104) and each foot (5a), (5b), (5c) and (5d).

12. Seat according to claim 11,
**characterised in that** the second structure (6, 106) of the seat comprises two L-shaped curved members (29) and (30) and four intermediate connection pieces (31), (32), (33) and (34), each L-shaped curved member (29) and (30) comprising, on the one hand, an upright stanchion (35, 36), which is fixedly joined with a plug-in type connection to a bottom structure (37) of the seat and, on the other hand, a horizontal side rail (38, 39), which is fixedly joined with a plug-in type connection to two intermediate connection pieces (31, 33) and (32, 34), which are arranged in the region of a front end (40, 41) of each horizontal side rail (38, 39) and a rear end (42, 43) of each horizontal side rail (38, 39), respectively, the two intermediate connection pieces (31) and (33), (32) and (34) which are fixedly joined to the same horizontal side rail (38, 39) each cooperating with different filter members (3, 103) and (4, 104), each intermediate connection piece (31), (32), (33) and (34) cooperating with second rotational guiding means (48), which are capable of partially or completely forming the second connection of the pivot type with a degree of rotational freedom between each filter member (3, 103) and (4, 104) and the front end (40, 41) and rear end (42, 43) of each horizontal side rail (38, 39).

13. Seat according to claim 12,
**characterised in that** each intermediate connection piece (31), (32), (33) and (34) comprises stop means (45), which are capable of limiting the rotational displacement of the filter members (3, 103) and (4, 104) in relation to the four independent feet (5a), (5b), (5c) and (5d), the stop means (45) of each intermediate connection piece (31), (32), (33) and (34) cooperating with a through-hole (46), which is provided inside each foot (5a), (5b), (5c) and (5d).
